# EUROPÄISCHE PATENTSCHRIFT

(11) **EP 1 934 144 B1**
(45) Veröffentlichungstag und Bekanntmachung des Hinweises auf die Patenterteilung: **16.06.2010**
(21) Anmeldenummer: 06805377.6
(22) Anmeldetag: 06.10.2006
(51) Int. Cl.: C02F 1/50, A01K 61/00, A01N 1/00, C02F 103/20, C02F 1/72, C02F 1/66

(54) **ZUSAMMENSETZUNG ZUR VERNICHTUNG VON FADENALGEN**
COMPOSITION FOR DESTROYING THREAD ALGAE
COMPOSITION POUR DETRUIRE DES ALGUES FILAMENTEUSES

(30) Priorität: 07.10.2005 DE 102005048460
(43) Veröffentlichungstag der Anmeldung: 25.06.2008
(73) Patentinhaber: Söll GmbH, 95030 Hof (DE)
(72) Erfinder: WILLUWEIT, Thomas, 95030 Wölbattendorf (DE)
(74) Vertreter: Reynolds, Julian David
(86) Internationale Anmeldenummer: PCT/DE2006/001758
(87) Internationale Veröffentlichungsnummer: WO 2007/041992

(56) Entgegenhaltungen:
- EP-A- 1 557 088
- DE-A1-102004 003 286
- NL-C2- 1 017 129
- US-A- 5 855 874

## Beschreibung

Die vorliegende Erfindung betrifft eine Zusammensetzung enthaltend Alkalicarbonat-Peroxyhydrate und Alkalihydrogencarbonate sowie die Verwendung dieser Zusammensetzung zur Bekämpfung von Fadenalgen, Keimen und Parasiten in Wässern und Sedimenten und an Oberflächen und die Verwendung von Alkalihydrogencarbonaten zur Stabilisierung von Alkalicarbonat-Peroxyhydraten.

Fadenalgen sind sowohl im Aquarium als auch im Gartenteich eine oftmals zur Plage werdende Algenart. Systematisch betrachtet gehören die Fadenalgen zu den niederen Pflanzen und werden dem Stamm der Grünalgen (*Chlorophyta*) zugeordnet. Ein Großteil der bekannten Grünalgenarten ist im Süßwasser beheimatet. Arten der Gattungen *Ulothrix, Spirogyra* und *Cladophora* stellen für viele Gartenteichbesitzer im Frühjahr und Sommer regelmäßig ein großes Ärgernis dar, wenn diese Algenarten aufgrund von Massenvermehrungen dann einen regelrechten Algenteppich ausbilden, der nur noch schwer aus dem Wasser zu entfernen ist.

Die Fadenalgen siedeln sich in der Regel auch direkt an Flächen und Wandungen sowie am losen Sediment und Gestein, sowie auf technischen Einrichtungen wie Filtern, Pumpen, Leitungen, Belüftungseinrichtungen etc. an, so dass es auch zu Beeinträchtigungen daran kommen kann.

Die Ursachen für das Algenwachstum sind häufig ein Überangebot von Nährstoffen und Licht. Als Maßnahmen zur Bekämpfung ist aus dem Stand der Technik bekannt, schnellwachsende Pflanzen in das Aquarium bzw. den Gartenteich zu setzen, um den Fadenalgen die Nährstoffquelle zu entziehen. Bis eine solche Maßnahme Wirkung zeigt, kann es einige Wochen dauern, ein algenfreies Aquarium bzw. einen Gartenteich wird nicht erhalten. Als weitere schnelle Maßnahme zur Reduzierung wird ein Wasserwechsel empfohlen. Auch diese Maßnahme ist vielfach nicht praktikabel. Gleiches gilt für die Reduzierung der Beleuchtung, was zwar für ein Aquarium möglich wäre, nicht aber für den Gartenteich.

Als ökologisch unbedenkliches Mittel zur Vernichtung von Fadenalgen ist Natriumcarbonat-Peroxyhydrat, auch als Natriumpercarbonat bezeichnet, bekannt. Weitere schnell wirkende und wirksame Mittel sind die chemischen Algenvernichter, die Wirkstoffe wie Terbutryn, Monilinuron, Zink- und Kupfersalze enthalten. Keines der bekannten Präparate hat eine selektive Wirkung auf Fadenalgen. Durch den Einsatz von derartigen Algenbekämpfungsmitteln wird gleichzeitig auch die Wasserqualität verschlechtert und das Wachstum der Pflanzen verringert, so dass Fällen manche Pflanzen ganz abgetötet werden können.

Nachteilig am Natriumcarbonat-Peroxyhydrat ist dessen geringe Stabilität, die Empfindlichkeit gegenüber Wasser und Wärme. Bei längerer oder unsachgemäßer Lagerung können sich die Substanzen zersetzen, so dass sie ihre eigentliche Wirkung nicht mehr entfalten können. Wegen der geringen Stabilität und der brandfördernden Wirkung unterliegt die Substanz Transport-, Lager- und Handelsbeschränkungen.

Insgesamt sind Alkalicarbonat-Peroxyhydrate ökologisch gut verträgliche Substanzen, die sich vorteilhaft bei der Wasseraufbereitung und auch zur Bekämpfung von pathogenen Keimen in der Aquakultur, in Aquariumwasser und in Gartenteichen etc. eingesetzt werden können. Nachteilig ist, dass sie aufgrund ihres Gefahrenpotentials nur unter strengen Sicherheitsauflagen transportiert und gelagert werden können und der Handel eingeschränkt ist.

Aus der europäischen Patentanmeldung EP 0 968 136 ist die Verwendung von Alkalipercarbonat-Peroxyhydraten in der Fischzucht bekannt. In der genannten Druckschrift wird die Verwendung dieser Substanze zur sauerstoffliefernden neutralisierenden und entkeimenden Aufbereitung von Wässern in Süß- als auch Seewasseranlagen, natürlichen Gewässern etc. offenbart. Gemäß dieser Druckschrift kommt den Alkalicarbonat-Peroxyhydraten insbesondere eine entkeimende Wirkung zu.

Der vorliegenden Erfindung lag somit die Aufgabe zugrunde, eine Zusammensetzung zur Verfügung zu stellen, die den sicheren Transport und eine langfristige Lagerung ohne das brandfördernde Gefahrenpotential von Alkalicarbonat-Peroxyhydraten ermöglicht.

Gegenstand, der vorliegenden Erfindung ist demgemäß eine Zusammensetzung, enthaltend Alkalicabonat-Peroxyhydrate und Alkalicarbonate und/oder -hydrogencarbonate, die dadurch gekennzeichnet ist, dass das Alkalicarbonat-Peroxyhydrat in einer Menge von 45 bis 85 Gew.-%, bezogen auf die Gesamtmenge der Zusammensetzung, enthalten ist.

Durch den Zusatz von Alkalicarbonat und/oder -hydrogencarbonat ist es möglich, die Alkalicarbonat-Peroxyhydrate zu stabilisieren, so dass die Substanz gut transportiert werden kann und auch lagerbar ist. Der Zusatz der Alkalicarbonate und/oder -hydrogencarbonate hat den Vorteil, dass diese Komponente den Einsatz der Peroxyhydrate zur Aufbereitung von Wässern etc. nicht beeinträchtigt, sondern vielmehr noch eine positive Wirkung auf das Wasser hat. Die Carbonate bzw. Hydrogencarbonate wirken hier als Stabilisatoren für die Peroxoverbindungen und kompensieren somit deren brandfördernde Wirkung.

Als Alkalicarbonat-Peroxyhydrate können die Lithium-, Natrium-, Kalium- und/oder Rubidiumverbindungen eingesetzt werden, wobei das Natriumcarbonat-Peroxyhydrat bevorzugt ist. Beim Einsatz der erfindungsgemäßen Zusammensetzung als Additiv zu Wässern wie Aquarien und Gartenteichen, können auch geringe Mengen der Kaliumverbindung enthalten sein, wobei diese nicht zu hoch sein sollten, da große Mengen Kalium fischgiftig wirken können.

In der erfindungsgemäßen Zusammensetzung kann das Alkalicarbonat-Peroxyhydrat in einer Menge bis zu 85 Gew.-% enthalten sein. Bevorzugte Zusammensetzungen enthalten diese Substanzen in einer Menge von 74 bis 82 Gew.-%.

Als weitere Substanz enthält die erfindungsgemäße Zusammensetzung Alkalihydrogencarbonat, wobei auch bei diesen Verbindungen die Natriumverbindungen bevorzugt eingesetzt werden. Die Hydrogencarbonate haben den Vorteil, dass sie einen milderen pH-Wert aufweisen als die Carbonate und im Gemisch mit den Alkalicarbonat-Peroxyhydraten unmittelbar ein Puffersystem darstellen, das eine positive Wirkung auf aufzubereitendes Wasser hat.

Sofern die erfindungsgemäße Zusammensetzung als Mittel zur Aufbereitung von Wässern etc. eingesetzt wird, können noch weitere Komponenten zugesetzt werden, die eine positive Wirkung auf die Wasserqualität haben. Beispielsweise können Komponenten enthalten sein, die eine mikrobiologische Wirkung aufweisen. Beispiele für Substanzen, die ergänzend enthalten sein können, sind Erdalkaliverbindungen, wie Calciumsalze, Chelatbildner, Alginate, mikrobiologische Kulturen etc.

Bei der Vernichtung der Fadenalgen bzw. beim mikrobiologischen Abbau der Zellsubstanz werden Nitrate und Phosphate freigesetzt, die als Nährstoffe für das Anwachsen neuer Fadenalgen dienen können. Um die Menge an sich bildenden Nährstoffen gering zu halten, hat es sich als vorteilhaft erwiesen, der erfindungsgemäßen Zusammensetzung Erdalkaliverbindungen, insbesondere Erdalkaliperoxide, vorzugsweise CaO₂, zuzusetzen. Die Zusatzstoffe können in der erfindungsgemäßen Zusammensetzung in einer Menge bis zu 10 Gew.-%, vorzugsweise bis zu 5 Gew.-% und insbesondere bis zu 2,5 Gew.-% enthalten sein.

Als weitere Komponenten kann das erfindungsgemäße Gemisch Mikroorganismen enthalten. Die Mikroorganismen können ausgewählt sein aus autotrophen und heterotrophen Mikroorganismen, insbesondere aus chemolithoautotrophen Nitrifikanten, wie den Ammoniakoxidanten und den Nitritoxidanten, heterotrophe Nitrifikanten, wie Pilze der Gattung Aspergillus, Penicillium und Cephalosporium, Algen, Arthrobacter sp., Alcaligenes sp., Nocordia sp., Bacilus azotoformans, Sporosarcina psychrophila, Pseudomonas und beliebige Gemische der voranstehenden, heterotrophe Denitrifikanten wie Paracocus sp. und Pseudomonas sp. und beliebigen Gemischen der voranstehenden.

Die Mikroorganismen können in einer Menge von 0,5 bis 4 Gew.-%, bezogen auf die gesamte Zusammensetzung enthalten sein.

Die erfindungsgemäße Zusammensetzung zeichnet sich insbesondere dadurch aus, dass sie das Wachstum von Fadenalgen hemmt, d.h. die Fadenalgen vernichtet. Das heißt die Fadenalge wird lysiert und stirbt ab. Ein weiterer Gegenstand der vorliegenden Erfindung ist demgemäß die Verwendung der erfindungsgemäßen Zusammensetzung aus Alkalicarbonat-Peroxyhydrat und Alkalicarbonaten und/oder -hydrogencarbonaten zur Vernichtung von Fadenalgen.

Durch den Zusatz von Alkalihydrogencarbonaten zu Alkalipercarbonat-Peroxyhydraten kann die Stabilität dieser Peroxoverbindungen deutlich verbessert werden. Ein weiterer Gegenstand der vorliegenden Erfindung ist demgemäß die Verwendung von Alkalihydrogencarbonaten zur Stabilisierung von Alkalipercarbonat-Peroxyhydraten. Die beiden Komponenten liegen vorzugsweise in einem Verhältnis von Alkalihydrogencarbonat zu Alkalipercarbonat-Peroxyhydrat in einem Mengenverhältnis von 15 : 85 bis 35 : 65 vor. Dieses Mengenverhältnis sollte vorzugsweise auch in Gemischen mit weiteren Komponenten eingehalten werden.

Ein weiterer Gegenstand der vorliegenden Erfindung betrifft die Verwendung der Zusammensetzung zur Bekämpfung von pathogenen Keimen und Parasiten in der Aquakultur, künstlich angelegten Teichen, wie Gartenteichen und natürlichen Teichen, Seen, und Aquarien.

Noch ein weiterer Gegenstand der vorliegenden Erfindung betrifft die Verwendung der Zusammensetzung zur Aufbereitung von Wasser, Gewässern und an Sedimenten.

### Beispiele

### Test der brandfördernden Wirkung eines Gemisches aus Alkalicarbonat-peroxyhydrat und NaHCO₃

Die Testvorschriften für die Bestimmung der brandfördernden Wirkung von Stoffen sind in der EU-Richtlinie 67/548 Teil 2 angegeben. Die brandfördernde Wirkung von Stoffen darf höchtens die von Ba(NO₃)₂ : Cellulose = 7 : 3 nicht überschreiten.
1. Es wurde ein Gemisch aus Natriumcarbonat-Peroxyhydrat und NaHCO₃ mit 80 Gew.-% Natriumcarbonat-Peroxyhydrat und 20% NaHCO₃ auf Cellulose im Verhältnis 7:3 untersucht.
Als Natriumcarbonat-Peroxyhydrat wurden handelsübliche Qualitäten untersucht. Das die Teilchengröße der Bestandteile im Gemisch betrug < 125 µm.

**Ergebnisse:**

| | **Referenzprobe** | **erfindungsgemäße Probe** |
|---|---|---|
| A. | 2,6 mm/s +/+ 0,2 mm/s | 1,4 mm/s +/+ 0,1 mm/s |
| B. | 2,9 mm/s +/+ 0,2 mm/s | 1,0 mm/s +/+ 0,1 mm/s |

2. Ein Gemisch aus Natriumcarbonat-Peroxyhydrat und NaHCO₃ in der Zusammensetzung wie in Beispiel 1 wurde unterschiedlichen Anteilen Cellulose, von 1 : 9 bis 9 : 1, untersucht.
Der höchste Wert der gemessenen brandfördernden Wirkung betrug 1,1 mm/s 0,1 mm/s.

Die Ergebnisse zeigen, dass bereits durch einen geringen Zusatz an NaHCO₃ die brandfördernde Wirkung von Natriumcarbonat-Peroxyhydrat derart erniedrigt werden kann, dass diese nicht mehr als Gefahrgut gemäß EU-Richtlinie gilt.

### Einsatz in der Wasserbehandlung

An einem Golfplatzteich wurde eine bestehende Fadenalgen-Massenvermehrung durch Zugabe einer Mischung aus 80% Natriumcarbonatperoxihydrat und 20 % Natriumbicarbonat innerhalb von 24 h beseitigt. Nach Entnahme der abgestorbenen Algenbiomasse war das Gewässer fadelalgenfrei.

## Patentansprüche

1. Nicht brandfördernde Zusammensetzung enthaltend Alkalicarbonat-Peroxyhydrate und Alkalihydrogencarbonate, **dadurch gekennzeichnet, dass** die Alkalicarbonat-Peroxyhydrate in einer Menge von 45 bis 85 Gew.-%. bezogen auf die Gesamtmenge der Zusammensetzung enthalten sind.

2. Zusammensetzung nach Anspruch 1, **dadurch gekennzeichnet, dass** das Alkalicarbonat-Peroxyhydrat Na₂CO₃ und xH₂O₂, vorzugsweise 2Na₂CO₃.3H₂O₂, oder ein Gemisch aus Na₂CO₃ und H₂O₂ ist.

3. Zusammensetzung nach einem der Ansprüche 1 oder 2, **dadurch gekennzeichnet, dass** die Alkalicarbonat-Peroxyhydrate in einer Menge von 74 bis 82 Gew.-%, bezogen auf die Gesamtmenge der Zusammensetzung enthalten sind.

4. Zusammensetzung nach einem der Ansprüche 1 bis 3, **dadurch gekennzeichnet, dass** die Gesamtmenge 1-10 Gew.-% Erdalkaliperoxide enthält.

5. Zusammensetzung nach einem der Ansprüche 1 bis 4, **dadurch gekennzeichnet, dass** die Zusammensetzung 0,5 bis 4 % Mikroorganismen enthält.

6. Verwendung der Zusammensetzung nach Anspruch 1 bis 5 zur Bekämpfung von pathogenen Keimen und Parasiten in der Aquakultur, Teichen und Aquarien.

7. Verwendung einer Zusammensetzung nach Anspruch 1 bis 5 zur Vernichtung von Fadenalgen.

8. Verwendung der Zusammensetzung nach einem der Ansprüche 1 bis 5 zur Aufbereitung von Wasser, insbesondere natürlichen und künstlichen Gewässern und Sedimenten.

## Claims

1. Non-oxidizing composition comprising alkalicarbonate-peroxyhydrates and alkali-hydrogencarbonates, **characterized in that** the composition contains 45 to 85 weight-% of alkalicarbonate peroxyhydrates based on the total quantity of the composition.

2. Composition according to claim 1, **characterized in that** the alkalicarbonate peroxyhydrate is Na₂CO₃ and xH₂O₂, preferably 2Na₂CO₃·3H₂O₂, or a mixture of Na₂CO₃ and H₂O₂.

3. Composition according to one of claims 1 to 3, **characterized in that** the composition contains 74 to 82 weight-% of alkalicarbonate peroxyhydrates based on the total quantity of the composition.

4. Composition according to one of claims 1 to 3, **characterized in that** the total quantity of the composition contains 1-10 weight-% of alkaline earth peroxides.

5. Composition according to one of claims 1 to 4, **characterized in that** the composition contains 0.5 to 4% microoganisms.

6. Use of the composition of claims 1 to 5, for combating pathogenic germs and parasites from aquaculture, ponds, and aquaria.

7. Use of a composition of claims 1 to 5, for destroying thread algae.

8. Use of the composition according to one of claims 1 to 5, for conditioning water, particularly with regard to natural and artificial bodies of water and sediments.

## Revendications

1. Composé non comburant contenant des peroxyhydrates de carbonate alcalin et des carbonates d'hydrogène alcalins, **caractérisé en ce que** les peroxyhydrates de carbonate alcalin sont contenus en proportion de 45 à 85 % en poids de la quantité totale du composé.

2. Composé selon la revendication 1, **caractérisé en ce que** le peroxyhydrate de carbonate alcalin est du Na₂CO₃ et du xH₂O₂, de préférence du 2Na₂CO₃.3H₂O₂, ou un mélange de Na₂CO₃ et de H₂O₂.

3. Composé selon l'une des revendications 1 ou 2, **caractérisé en ce que** les peroxyhydrates de carbonate alcalin sont contenus en proportion de 74 à 82 % en poids de la quantité totale du composé.

4. Composé selon l'une des revendications 1 à 3, **caractérisé en ce que** la quantité totale contient 1 à 10 % en poids de peroxyde alcalino-terreux.

5. Composé selon l'une des revendications 1 à 4, **caractérisé en ce que** le composé contient 0,5 à 4 % de micro-organismes.

6. Utilisation du composé selon la revendication 1 à 5 pour lutter contre des parasites et des germes pathogènes en aquaculture, dans des étangs et dans des aquariums.

7. Utilisation d'un composé selon la revendication 1 à 5 pour la destruction d'algues filamenteuses.

8. Utilisation du composé selon l'une des revendications 1 à 5 pour la préparation d'eau, notamment de sédiments et de milieux aquatiques naturels et artificiels.
